# EUROPÄISCHE PATENTANMELDUNG

(11) **EP 2 458 253 A1**
(43) Veröffentlichungstag der Anmeldung: **30.05.2012**
(21) Anmeldenummer: 10192342.3
(22) Anmeldetag: 24.11.2010
(51) Int. Cl.: F16L 11/24

(54) **Wickelschlauch**

(71) Anmelder: NORRES Schlauchtechnik GmbH & Co. KG, 45881 Gelsenkirchen (DE)
(72) Erfinder:
(74) Vertreter: Rohmann, Michael

(57) **Zusammenfassung**

Wickelschlauch mit zumindest einem wendelförmig zu dem Wickelschlauch gewickelten Werkstoffstreifen (1) sowie zumindest einer wendelförmig an der Außenseite des Wickelschlauches gewickelten Armierung (2), wobei die Armierung aus zumindest einem Kunststoff besteht und auf die Außenseite des Wickelschlauches über eine Armierungsschweißnaht aufgeschweißt ist. Im Bereich der Armierungsschweißnaht sind zur Gewährleistung der Temperaturbeständigkeit der Armierungsschweißnaht zumindest zwei Lagen, insbesondere zumindest drei Lagen des zumindest einen Werkstoffstreifens übereinander angeordnet.

## Beschreibung

Die Erfindung betrifft einen Wickelschlauch mit zumindest einem wendelförmig zu dem Wickelschlauch gewickelten Werkstoffstreifen sowie zumindest einer wendelförmig an der Außenseite des Wickelschlauches gewickelten Armierung. - Es liegt im Rahmen der Erfindung, dass Werkstoffstreifensegmente benachbarter Wicklungen des Wickelschlauches überlappend miteinander verbunden bzw. verschweißt sind. Im Rahmen der Erfindung kann lediglich ein Werkstoffstreifen wendelförmig zu dem Wickelschlauch gewickelt werden oder es werden zwei oder mehr Werkstoffstreifen wendelförmig zu dem Wickelschlauch gewickelt. Es liegt fernerhin im Rahmen der Erfindung, dass zumindest ein Werkstoffstreifen des Wickelschlauches aus Kunststoff besteht. Die Armierung wird mit dem zumindest einen Werkstoffstreifen wendelförmig gewickelt und bei der Armierung handelt es sich zweckmäßigerweise um eine drahtförmige, schlauchförmige bzw. bandförmige Armierung.

Aus der Praxis sind Wickelschläuche der vorstehend genannten Art bekannt, die insbesondere bei der Durchführung von Abgasuntersuchungen verwendet werden und mit diesen Wickelschläuchen werden die heißen Abgase abgesaugt. An der Absaugstelle werden die Wickelschläuche entweder an einem Absaugtrichter montiert, der hinter dem Auspuff des Fahrzeuges aufgestellt ist oder sie werden über eine Schlauchtülle oder dergleichen direkt auf den Auspuff aufgesteckt. Diese Wickelschläuche sind häufig beachtlichen mechanischen Beanspruchungen ausgesetzt und es muss dafür Sorge getragen werden, dass die Schlauchwandung ein ausreichendes elastisches Rückstellvermögen aufweist. Auf dem Boden liegende Wickelschläuche können beispielsweise durch Unachtsamkeit mit einem Fahrzeug überfahren werden oder auf andere Art und Weise gequetscht werden. Um nichtsdestoweniger die weitere Verwendbarkeit des Wickelschlauches zu gewährleisten, muss der Wickelschlauch bzw. die Schlauchwandung des Wickelschauches ein so ausreichendes elastisches Rückstellvermögen aufweisen, dass der Wickelschlauch nach Entlastung von der von außen einwirkenden Kraft seinen Öffnungsquerschnitt wieder freigibt. Aus diesem Grunde ist es bereits bekannt, dass Wickelschläuche aus geeigneten Elastomeren und/oder Thermoplasten hergestellt werden. Auch die Armierung dieser Wickelschläuche besteht zweckmäßigerweise aus einem draht-, band- oder schlauchförmigen Polymer.

Die vorstehend erläuterten, aus der Praxis bekannten Wickelschläuche müssen insbesondere bei einer Verwendung für die Abgasabsaugung eine hohe Temperaturbeständigkeit aufweisen. Für die bislang bekannten Wickelschläuche wird eine maximale Abgastemperatur von 200 °C angegeben, wenn mit dem Abgas 50 % Frischluft angesaugt wird. Die Ansaugung der Frischluft erfolgt dabei über die oben bereits genannten Ansaugtrichter. Ohne Ansaugung dieser Frischluft haben die bekannten Wickelschläuche eine Dauergebrauchstemperatur von maximal ca. 130 °C. Moderne Motoren, insbesondere Dieselmotoren, erzeugen immer heißere Abgase. Hinzu kommt, dass immer häufiger keine Ansaugtrichter mit Frischluftansaugung mehr verwendet werden und die Wickelschläuche mit entsprechenden Anschlussstücken direkt auf den Auspuff des Kraftfahrzeuges gesteckt werden. Durch die hohen Temperaturen kommt es immer öfter zum Versagen der Wickelschläuche durch Auftrennen bzw. Aufschmelzen der Schweißnähte zwischen Armierung und Werkstoffstreifen oder zwischen miteinander verschweißten Werkstoffstreifensegmenten bzw. zum Schmelzen der Schlauchwandung selbst.

Demgegenüber liegt der Erfindung das technische Problem zugrunde, einen Wickelschlauch der eingangs genannten Art anzugeben, der zum einen ein ausreichendes elastisches Rückstellvermögen aufweist und zum anderen eine höhere Temperaturbeständigkeit aufweist als die bislang bekannten Wickelschläuche.

Zur Lösung dieses technischen Problems lehrt die Erfindung einen Wickelschlauch mit zumindest einem wendelförmig zu dem Wickelschlauch gewickelten Werkstoffstreifen sowie zumindest einer wendelförmig an der Außenseite des Wickelschlauches gewickelten Armierung,
wobei die Armierung aus zumindest einem Kunststoff besteht und auf die Außenseite des Wickelschlauches über eine Armierungsschweißnaht aufgeschweißt ist
und wobei im Bereich der Armierungsschweißnaht zumindest zwei Lagen, insbesondere zumindest drei Lagen des zumindest einen Werkstoffstreifens übereinander angeordnet sind.

Die zumindest zwei Lagen, insbesondere die zumindest drei Lagen des zumindest einen Werkstoffstreifens sind zur Schlauchinnenseite hin unterhalb der Armierung und unterhalb der Armierungsschweißnaht angeordnet. Durch die Mehrzahl der Lagen wird die Wandstärke der Schlauchwandung im Bereich der Armierungsschweißnaht erhöht und durch diese Wandstärkenvergrößerung wird ein thermischer Schutz der Armierungsschweißnaht in Bezug auf durch den Wickelschlauch strömende heiße fluide Medien erreicht.

Bei der Armierung handelt es sich zweckmäßigerweise um eine drahtförmige, schlauchförmige oder bandförmige Armierung aus Kunststoff. Es liegt im Rahmen der Erfindung, dass die Armierung schmaler bzw. deutlich schmaler ist als der zumindest eine zu dem Wickelschlauch gewickelte Werkstoffstreifen. Bei der Armierung handelt es sich gleichsam um eine Stützwendel aus Kunststoff. Es liegt weiterhin im Rahmen der Erfindung, dass der erfindungsgemäße Wickelschlauch zumindest einen wendelförmig gewickelten Werkstoffstreifen mit hoher Temperaturbeständigkeit aufweist. Hohe Temperaturbeständigkeit meint hier insbesondere, dass der Werkstoffstreifen bis zu einer Temperatur von zumindest 130 °C, vorzugsweise zumindest 140 °C und bevorzugt zumindest 150 °C beständig ist und insbesondere nicht schmilzt.

Gemäß einer bevorzugten Ausführungsform wird der erfindungsgemäße Wickelschlauch zum Durchleiten eines erwärmten bzw. eines erhitzten fluiden Mediums eingesetzt. Bei dem fluiden Medium handelt es sich vor allem um ein Gas und insbesondere um ein heißes Abgas. Ein solches heißes Gas bzw. heißes Abgas weist eine Temperatur von zumindest 150 °C und insbesondere eine Temperatur von mindestens 180 °C auf.

Es liegt fernerhin im Rahmen der Erfindung, dass Werkstoffstreifensegmente benachbarter Wicklungen des Wickelschlauches über Längskantenabschnitte überlappend miteinander verbunden sind und dabei über eine Streifenschweißnaht miteinander verschweißt sind.

Nach einer bevorzugten Ausführungsform der Erfindung ist der Wickelschlauch aus einem einzigen Werkstoffstreifen gewickelt und im Bereich der Armierungsschweißnaht sind zumindest zwei, vorzugsweise drei Lagen des Werkstoffstreifens übereinander angeordnet. Es liegt dabei im Rahmen der Erfindung, dass der einzige Werkstoffstreifen aus einem thermoplastisch verschweißbaren Kunststoff besteht bzw. einen thermoplastisch verschweißbaren Kunststoff aufweist. Gemäß einer Ausführungsvariante besteht der einzige Werkstoffstreifen aus einem mit einem thermoplastisch verschweißbaren Kunststoff beschichteten Gewebe. Es liegt weiterhin im Rahmen der Erfindung, dass Werkstoffstreifensegmente benachbarter Wicklungen des Wickelschlauches aus dem einzigen Werkstoffstreifen überlappend über eine Streifenschweißnaht miteinander verschweißt sind.

Gemäß einer anderen bevorzugten Ausführungsform der Erfindung sind zumindest ein thermoplastisch verschweißbarer Werkstoffstreifen und zumindest ein nicht thermoplastisch verschweißbarer Werkstoffstreifen wendelförmig zu dem Wickelschlauch gewickelt. Zweckmäßigerweise ist der nicht thermoplastisch verschweißbare Werkstoffstreifen dabei auf der Innenseite des Wickelschlauches angeordnet. Empfohlenermaßen ist der nicht thermoplastisch verschweißbare Werkstoffstreifen zumindest im Bereich der Armierungsschweißnaht an der Innenseite des Wickelschlauches angeordnet. Auf diese Weise wird die Armierungsschweißnaht von dem nicht thermoplastisch verschweißbaren Werkstoffstreifen gleichsam überdeckt und somit insbesondere in Bezug auf durch den Wickelschlauch strömende heiße fluide Medien thermisch geschützt. - Es empfiehlt sich, dass eine Streifenschweißnaht, die überlappende Werkstoffstreifensegmente bzw. Längskantenabschnitte des zumindest einen thermoplastisch verschweißbaren Werkstoffstreifens verbindet, von dem zumindest einen, auf der Innenseite des Wickelschlauches angeordneten nicht thermoplastisch verschweißbaren Werkstoffstreifen abgedeckt ist und somit thermisch geschützt ist.

Nach bevorzugter Ausführungsform der Erfindung ist der zumindest eine nicht thermoplastisch verschweißbare Werkstoffstreifen ein hitzebeständiges Gewebe oder ein Metallfolienstreifen, insbesondere ein Aluminiumstreifen bzw. Aluminiumfolienstreifen. Hitzebeständiges Gewebe meint dabei insbesondere ein Gewebe, das bei Temperaturen unterhalb 300 °C, insbesondere bei Temperaturen unterhalb 250 °C beständig ist und vor allem nicht schmilzt.

Nach einer empfohlenen Ausführungsform der Erfindung ist bei dem erfindungsgemäßen Wickelschlauch zumindest ein thermoplastisch verschweißbarer Werkstoffstreifen mit zumindest einem nicht thermoplastisch verschweißbaren Werkstoffstreifen vernäht. Vernäht meint dabei im Vergleich zu einer Schweißnaht die Verbindung über eine Nähnaht. Das Vernähen erfolgt dabei zweckmäßigerweise mit einem hitzebeständigen Garn, das bei Temperaturen unterhalb 300 °C beständig ist, insbesondere bei Temperaturen unterhalb von 250 °C beständig ist und nicht schmilzt.

Es liegt im Rahmen der Erfindung, dass zumindest zwei Lagen des zumindest einen Werkstoffstreifens des Wickelschlauches unterhalb der Armierungsschweißnaht über eine Streifenschweißnaht thermoplastisch miteinander verschweißt sind. Vorzugsweise ist zumindest eine dritte Lage Werkstoffstreifen unterhalb dieser Streifenschweißnaht angeordnet. Mit unterhalb ist hier und nachfolgend die Orientierung zur Schlauchinnenseite bzw. zum Schlauchinneren hin gemeint. Es liegt ferner im Rahmen der Erfindung, dass die beiden über die Streifenschweißnaht verschweißten Lagen des zumindest einen Werkstoffstreifens aus einem thermoplastisch verschweißbaren Werkstoff bestehen bzw. einen thermoplastisch verschweißbaren Werkstoff aufweisen. Bei der vorzugsweise vorgesehenen dritten Lage Werkstoffstreifen unterhalb der Streifenschweißnaht handelt es sich nach einer bevorzugten Ausführungsform der Erfindung um einen nicht thermoplastisch verschweißbaren Werkstoffstreifen. Dieser Werkstoffstreifen überdeckt die Streifenschweißnaht an der Innenseite des Wickelschlauches und schützt die Streifenschweißnaht thermisch insbesondere vor durch den Wickelschlauch geleiteten heißen fluiden Medien.

Eine bevorzugte Ausführungsform der Erfindung ist dadurch gekennzeichnet, dass Längskantenabschnitte einer inneren Lage des zumindest einen Werkstoffstreifens in den Innenraum des Wickelschlauches vorstehen bzw. gleichsam schuppenartig in den Innenraum des Wickelschlauches vorstehen. Dabei kann es sich um einen thermoplastisch verschweißbaren Werkstoffstreifen handeln oder um einen nicht thermoplastisch verschweißbaren Werkstoffstreifen. Zweckmäßigerweise sind die Längskantenabschnitte des betreffenden Werkstoffstreifens zur Innenseite bzw. zum Inneren des Wickelschlauches hin abgebogen. Durch diese vorstehenden Längskantenabschnitte kann ein durch den Wickelschlauch strömendes fluides Medium bzw. heißes fluides Medium umgelenkt und von der Schlauchwandung ferngehalten werden. Auch auf diese Weise kann ein effektiver thermischer Schutz der Schweißnaht bzw. der Schweißnähte erzielt werden.

Eine empfohlene Ausführungsform der Erfindung zeichnet sich dadurch aus, dass in der Schlauchwandung des Wickelschlauches eine Mehrzahl von Lufteintrittsöffnungen vorgesehen ist. Es liegt dabei im Rahmen der Erfindung, dass die Lufteintrittsöffnungen in Längsrichtung des Wickelschlauches verteilt angeordnet sind. Damit wird erreicht, dass beim Durchströmen eines fluiden Mediums bzw. eines Gases in Längsrichtung des Wickelschlauches Luft bzw. Außenluft durch die Lufteintrittsöffnungen aufgrund des Unterdrucks im Schlauch eingesaugt wird. Auf diese Weise wird eine Temperatursenkung des durch den Wickelschlauch strömenden fluiden Mediums bzw. heißen fluiden Mediums erreicht. Auch dadurch können Schweißnähte effektiv vor Hitzeeinwirkung geschützt werden. Bei den Lufteintrittsöffnungen kann es sich um Öffnungen, handeln, die permanent geöffnet sind, beispielsweise um ausgestanzte Löcher mit kreisrundem Öffnungsquerschnitt oder dergleichen. Die Lufteintrittsöffnungen können aber auch in Form von Schlitzen ausgebildet sein, die nur bei anliegendem Unterdruck öffnen und ansonsten verschlossen sind. Nach einer Ausführungsform der Erfindung ist ein thermoplastisch verschweißbarer Werkstoffstreifen schlauchinnenseitig mit einem nicht thermoplastisch verschweißbaren Werkstoffstreifen kaschiert. Zum Verbinden benachbarter Längskantenabschnitte dieses Werkstoffstreifenaggregates aus thermoplastisch verschweißbarem Werkstoffstreifen und nicht thermoplastisch verschweißbarem Werkstoffstreifen ist ein Längskantenabschnitt des Werkstoffstreifenaggregates auf den benachbarten Längskantenabschnitt umgeschlagen und die beiden aufeinanderliegenden Längskantenabschnitte sind miteinander thermoplastisch verschweißt. Zweckmäßigerweise ist der thermoplastisch verschweißbare Werkstoffstreifen schlauchinnenseitig mit einem Metallfolienstreifen, insbesondere mit einem Aluminiumfolienstreifen kaschiert. Empfohlenermaßen ist bei dieser Ausführungsform der Erfindung die Armierung jeweils sowohl mit einem umgeschlagenen Längskantenabschnitt verschweißt als auch mit dem unter der Armierung angeordneten Längskantenabschnitt des Werkstoffstreifens. Gemäß einer empfohlenen Ausführungsvariante der Erfindung sind zwischen zumindest zwei Lagen des zumindest einen Werkstoffstreifens Luftkammern in der Schlauchwandung des Wickelschlauches vorgesehen. Zweckmäßigerweise sind die Luftkammern in Längsrichtung des Wickelschlauches verteilt vorgesehen. Mit diesen Luftkammern kann eine zusätzliche thermische Trennung von Innenwand und Außenwand des Wickelschlauches erzielt werden.

Nach einer bevorzugten Ausführungsform der Erfindung ist die Armierung ein wendelförmig gewickeltes Hohlprofil aus Kunststoff. Vorzugsweise ist das Hohlprofil im Querschnitt rund und insbesondere kreisförmig oder elliptisch ausgebildet. Andere Querschnittsformen sind aber ebenfalls denkbar. Empfohlenermaßen besteht die Armierung zumindest zum größten Teil aus zumindest einem thermoplastischen Elastomer und bevorzugt zu mindestens 90 Gew.-% aus zumindest einem thermoplastichen Elastomer. Bei dem thermoplastischem Elastomer handelt es sich vorzugsweise um TPO (thermoplastisches Elastomer auf Olefinbasis) und/oder um TPV (vernetztes thermoplastisches Elastomer auf Olefinbasis). Nach einer anderen Ausführungsform der Erfindung kann es sich bei dem thermoplastischen Elastomer der Armierung auch um ein thermoplastisches Elastomer auf Urethanbasis handeln. - Empfohlenermaßen beträgt die Härte des Kunststoffes der Armierung 30 Shore-D bis 50 Shore-D, bevorzugt 35 Shore-D bis 45 Shore-D und besonders bevorzugt 40 Shore-D bzw. etwa 40 Shore-D. Zweckmäßigerweise liegt der Druckverformungsrest für den Kunststoff der Armierung bei 45 % bis 65 %, bevorzugt bei 50 % bis 60 % und besonders bevorzugt bei 52 % bis 56 % (Druckverformungsrest bei 70 °C gemäß DIN ISO 815).

Eine empfohlene Ausführungsform der Erfindung ist dadurch gekennzeichnet, dass der zumindest eine thermoplastisch verschweißbare Werkstoffstreifen des Wickelschlauches aus einem Gewebe mit einer Beschichtung aus thermoplastisch verschweißbarem Kunststoff besteht. Bei dem thermoplastisch verschweißbaren Kunststoff handelt es sich vorzugsweise um ein thermoplastisches Elastomer und insbesondere um TPO (thermoplastisches Elastomer auf Olefinbasis) und/oder um TPV (vernetztes thermoplastisches Elastomer auf Olefinbasis). Zweckmäßigerweise handelt es sich bei dem Gewebe des thermoplastisch verschweißbaren Werkstoffstreifens um ein Gewebe aus Polyesterfasern und/oder Polyamidfasern und/oder Glasfasern und/oder Aramidfasern.

Es hat sich bewährt, dass der bei einigen Ausführungsformen der Erfindung eingesetzte nicht thermoplastisch verschweißbare Werkstoffstreifen aus einem Gewebe aus Glasfasern und/oder Aramidfasern besteht, wobei das Gewebe beschichtet sein kann. Zweckmäßigerweise besteht die eine Beschichtung dieses Gewebes des nicht thermoplastisch verschweißbaren Werkstoffstreifens aus einem hitzebeständigen Werkstoff, beispielsweise aus Polyurethan, Silikon oder dergleichen.

Der Erfindung liegt die Erkenntnis zugrunde, dass der erfindungsgemäße Wickelschlauch eine hervorragende Temperaturbeständigkeit bzw. Hitzebeständigkeit aufweist. Der erfindungsgemäße Wickelschlauch ist im Vergleich zu den aus der Praxis bzw. aus dem Stand der Technik bekannten Wickelschläuchen bei bis zu 20 °C bzw. sogar bis zu 30 °C höheren Temperaturen beständig. So können insbesondere relativ heiße Abgase durch den Wickelschlauch geleitet werden, ohne dass es zum Aufschmelzen bzw. Auftrennen der Schweißnähte kommt bzw. ohne dass es zu einem nachteilhaften Schmelzen von Wickelschlauchkomponenten kommt. Nichtsdestoweniger weist der erfindungsgemäße Wickelschlauch ein ausgezeichnetes elastisches Rückstellvermögen auf. Der erfindungsgemäße Wickelschlauch kann durch mechanische Beanspruchungen verformt werden und weist nach Entlastung aufgrund des elastischen Rückstellvermögens wieder seinen vorherigen Öffnungsquerschnitt auf, so dass der weitere Einsatz des Wickelschlauches problemlos gewährleistet ist. Hervorzuheben ist auch, dass der erfindungsgemäße Wickelschlauch mit verhältnismäßig geringem Aufwand und somit kostengünstig herstellbar ist.

Nachfolgend wird die Erfindung anhand einer lediglich ein Ausführungsbeispiel darstellenden Zeichnung näher erläutert. Es zeigen in schematischer Darstellung:

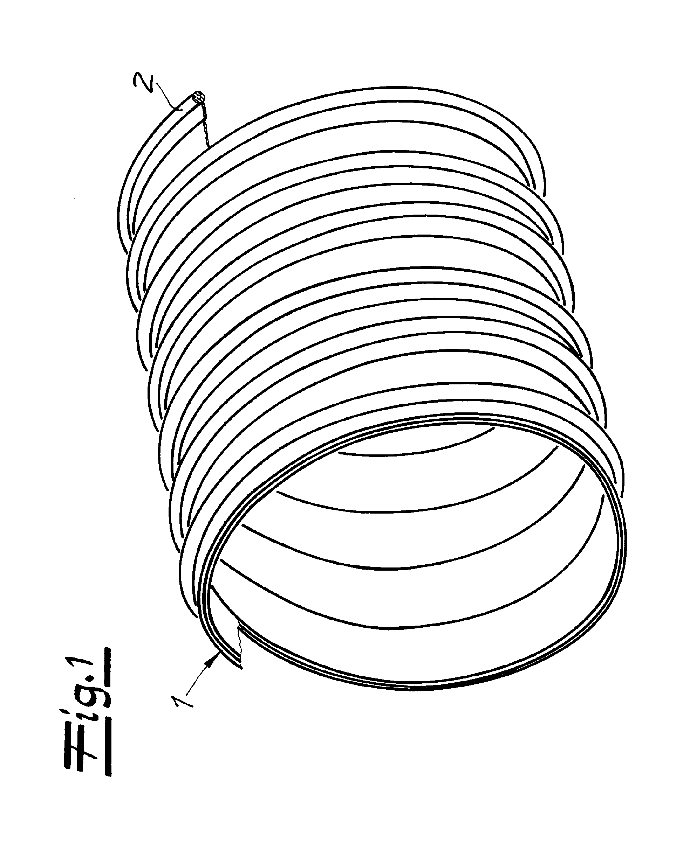

- Fig. 1: eine perspektivische Ansicht eines erfindungsgemäßen Wickelschlauches,
- Fig. 2: einen Schnitt durch die Schlauchwandung des Wickelschlauches gemäß Fig. 1 in einer ersten Ausführungsform,
- Fig. 3: den Gegenstand nach Fig. 2 in einer zweiten Ausführungsform,
- Fig. 4: den Gegenstand gemäß Fig. 2 in einer dritten Ausführungsform,
- Fig. 5: den Gegenstand nach Fig. 2 in einer vierten Ausführungsform,
- Fig. 6: den Gegenstand gemäß Fig. 2 in einer fünften Ausführungsform,
- Fig. 7: den Gegenstand nach Fig. 2 in einer sechsten Ausführungsform,
- Fig. 8: den Gegenstand gemäß Fig. 2 in einer siebten Ausführungsform,
- Fig. 9: den Gegenstand nach Fig. 2 in einer achten Ausführungsform, und
- Fig. 10: den Gegenstand gemäß Fig. 2 in einer neunten Ausführungsform.

Die Figuren zeigen einen erfindungsgemäßen Wickelschlauch mit zumindest einem wendelförmig zu dem Wickelschlauch gewickelten Werkstoffstreifen 1 sowie zumindest einer wendelförmig an der Außenseite des Wickelschlauches gewickelten Armierung 2. Die Armierung 2 besteht aus einem Kunststoff und ist im Ausführungsbeispiel nach den Figuren als drahtförmige Armierung in Form eines Hohlprofils aus Kunststoff ausgeführt. Die Armierung 2 ist auf die Außenseite des Wickelschlauches über eine Armierungsschweißnaht 3 aufgeschweißt. Im Bereich dieser Armierungsschweißnaht 3 sind zur Gewährleistung der Temperaturbeständigkeit der Armierungsschweißnaht 3 zumindest zwei Lagen a, b, vorzugsweise drei Lagen a, b, c des zumindest einen Werkstoffstreifens 1 übereinander angeordnet.

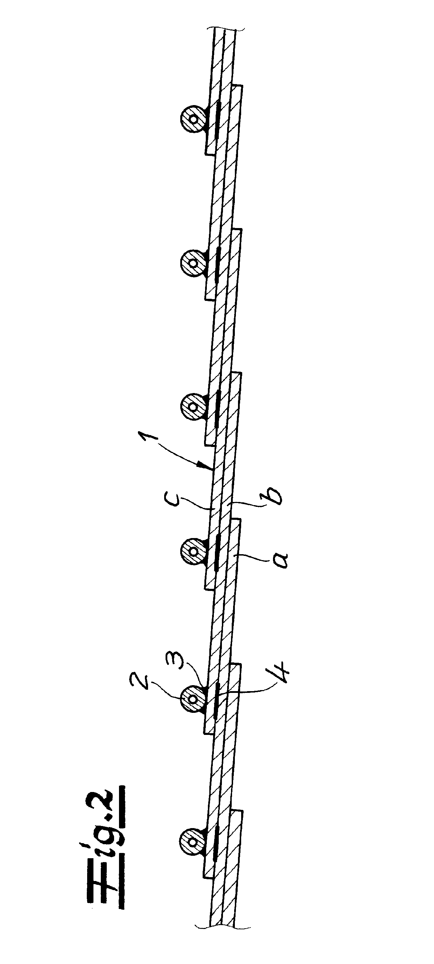

Im Ausführungsbeispiel nach Fig. 2 ist der Wickelschlauch aus einem einzigen thermoplastisch verschweißbaren Werkstoffstreifen 1 wendelförmig gewickelt. Im Bereich der Armierungsschweißnaht 3 sind drei Lagen a, b, c dieses Werkstoffstreifens 1 übereinander angeordnet. Unterhalb der Armierungsschweißnaht 3 sind hier zwei überlappende Werkstoffstreifensegmente bzw. zwei Lagen b, c mittels einer Streifenschweißnaht 4 miteinander verbunden. Sowohl bezüglich der Armierungsschweißnaht 3 (zur Schlauchinnenseite hin drei Lagen a, b, c des Werkstoffstreifens 1) als auch bezüglich der Streifenschweißnaht 4 (zur Schlauchinnenseite hin zwei Lagen a, b des Werkstoffstreifens 1) wird im Vergleich zu bekannten Wickelschläuchen eine Schlauchwandverstärkung erreicht und somit ein effektiver thermischer Schutz bzw. eine effektive thermische Isolierung der Schweißnähte 3, 4.

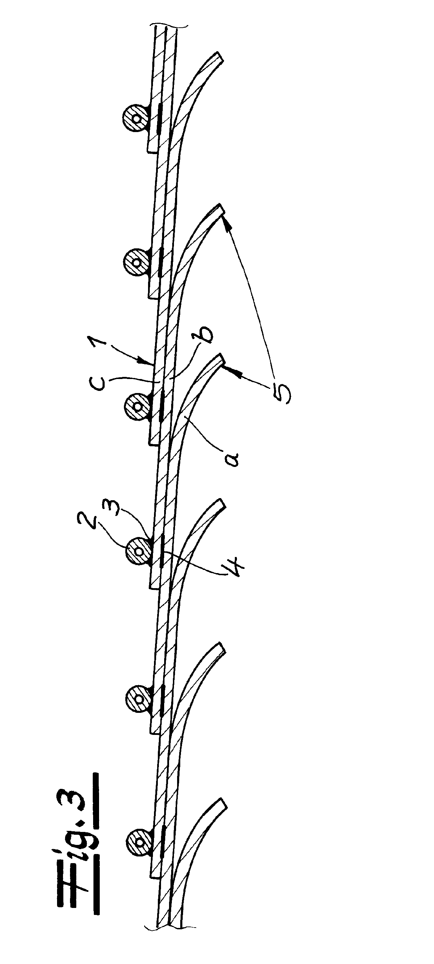

Die Ausführungsform nach Fig. 3 entspricht im Wesentlichen der Ausführungsform gemäß Fig. 2. Hier sind lediglich Längskantenabschnitte 5 der jeweils inneren Lage a in den Innenraum des Wickelschlauches gebogen. Auf diese Weise kann die Strömung eines heißen fluiden Mediums umgelenkt werden und von der Schlauchwandung des Wickelschlauches abgelenkt werden, so dass auch auf diese Weise eine effektive thermische Isolierung der Scheißnähte 3, 4 resultiert. Auch im Ausführungsbeispiel nach Fig. 3 sind unter Einbeziehung der bogenförmigen Längskantenabschnitte 5 im Bereich der Armierungsschweißnaht 3 drei Lagen a, b, c des Werkstoffstreifens 1 übereinander angeordnet.

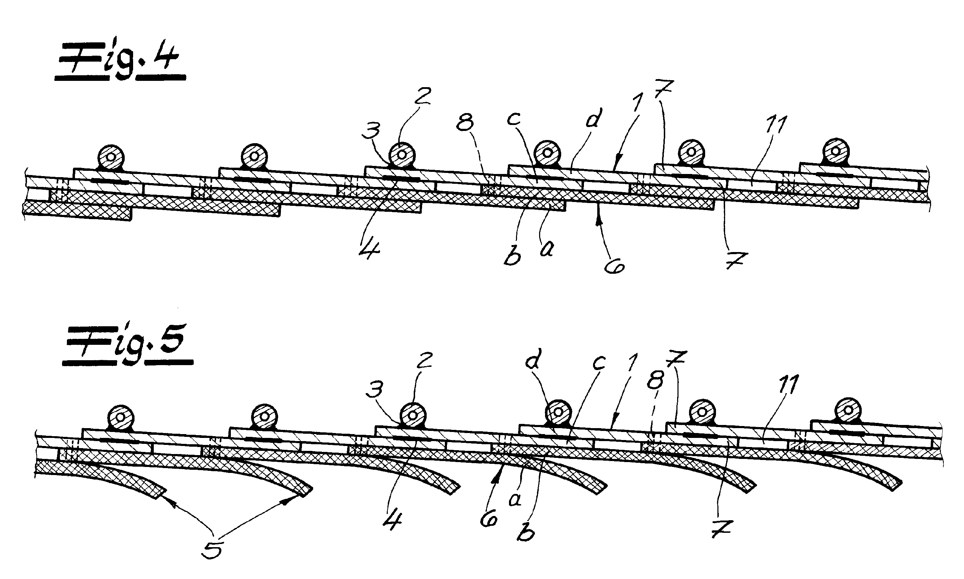

Im Ausführungsbeispiel nach Fig. 4 ist ein thermoplastisch verschweißbarer Werkstoffstreifen 1 mit einem nicht thermoplastisch verschweißbaren Werkstoffstreifen 6 wendelförmig zu dem Wickelschlauch gewickelt. Der nicht thermoplastisch verschweißbare Werkstoffstreifen 6 ist vorzugsweise und im Ausführungsbeispiel auf der Innenseite des Wickelschlauches angeordnet. Bei dem thermoplastisch verschweißbaren Werkstoffstreifen 1 sind Werkstoffstreifensegmente benachbarter Wicklungen des Wickelschlauches über Längskantenabschnitte 7 überlappend mittels der Streifenschweißnaht 4 miteinander verschweißt. Der thermoplastisch verschweißbare Werkstoffstreifen 1 ist im Übrigen mit dem thermoplastisch nicht verschweißbaren Werkstoffstreifen 6 über eine Nähnaht 8 vernäht. Im Ausführungsbeispiel gemäß Fig. 4 sind in Bezug auf die Armierungsschweißnaht 3 vier Lagen a, b, c, d Werkstoffstreifen 1, 6 schlauchinnenseitig übereinander angeordnet und in Bezug auf die Streifenschweißnaht 4 drei Lagen a, b, c Werkstoffstreifen 1, 6 schlauchinnenseitig übereinander angeordnet. Dadurch wird ein effektiver thermischer Schutz für die Armierungsschweißnaht 3 und die Streifenschweißnaht 4 gewährleistet. Im Übrigen sind im Ausführungsbeispiel nach Fig. 4 zwischen dem thermoplastisch verschweißbaren Werkstoffstreifen 1 und dem nicht thermoplastisch verschweißbaren Werkstoffstreifen 6 Luftkammern 11 vorgesehen, die ebenfalls eine zusätzliche thermische Isolierung ermöglichen.

Das Ausführungsbeispiel gemäß Fig. 5 entspricht im Wesentlichen der Ausführungsform nach Fig. 4. Hier sind lediglich Längskantenabschnitte 5 des nicht thermoplastisch verschweißbaren Werkstoffstreifens 6 (ähnlich wie im Ausführungsbeispiel nach Fig. 3) zum Schlauchinneren hin gebogen.

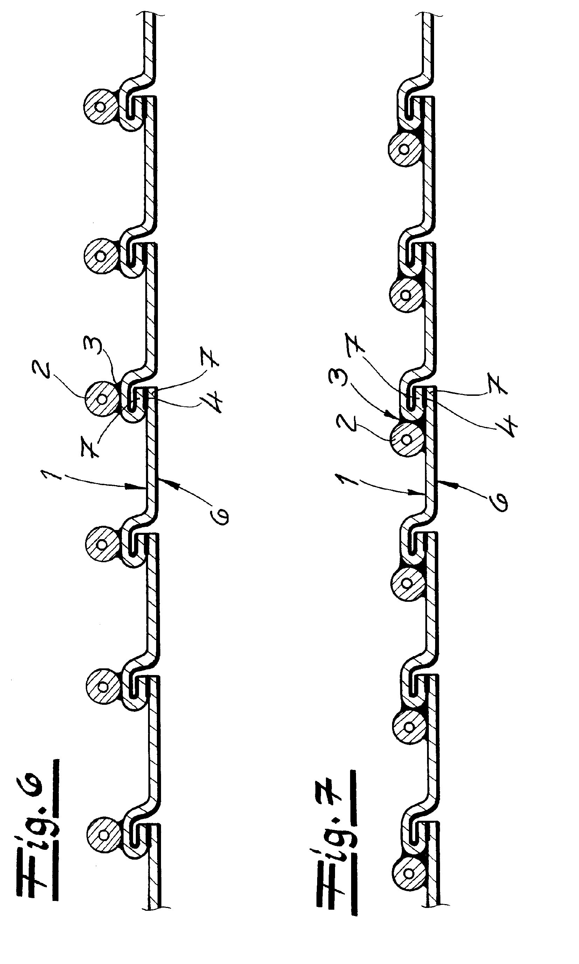

Im Ausführungsbeispiel nach den Fig. 6 und 7 ist ein thermoplastisch verschweißbarer Werkstoffstreifen 1 schlauchinnenseitig mit einem thermoplastisch nicht verschweißbaren Werkstoffstreifen 6 in Form eines Aluminiumfolienstreifens kaschiert. Zum Verbinden benachbarter Längskantenabschnitte 7 dieses Werkstoffstreifenaggregates aus Werkstoffstreifen 1 und Werkstoffstreifen 6 ist ein Längskantenabschnitt 7 auf den benachbarten Längskantenabschnitt 7 umgeschlagen und die beiden aufeinanderliegenden Längskantenabschnitte 7 sind mittels der Streifenschweißnaht 4 miteinander thermoplastisch verschweißt. Im Ausführungsbeispiel nach Fig. 6 ist die Armierung 2 über dem umgeschlagenen Längskantenabschnitt 7 auf den Werkstoffstreifen 1 mittels der Armierungsschweißnaht 3 aufgeschweißt. Bevorzugt wird jedoch die Ausführungsform nach Fig. 7. Hier ist die Armierung 2 vor dem umgeschlagenen Längskantenabschnitt 7 angeordnet und mittels Armierungsschweißnaht 3 sowohl an das unterhalb der Armierung 2 angeordnete Segment des Werkstoffstreifens 1 angeschweißt als auch an das neben der Armierung 2 angeordnete umgeschlagene Segment des Werkstoffstreifens 1 angeschweißt.

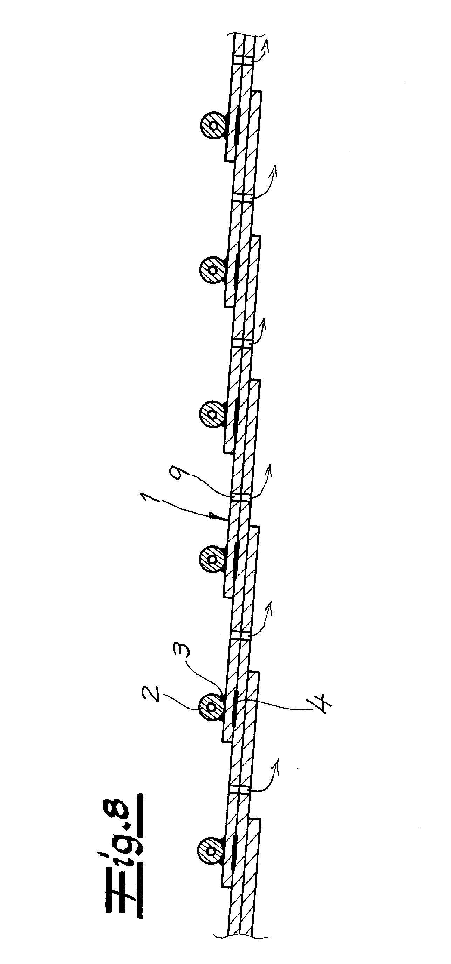

Die Ausführungsform nach Fig. 8 entspricht im Wesentlichen der Ausführungsform gemäß Fig. 2. Hier sind lediglich zusätzlich Lufteintrittsöffnungen 9 in die Schlauchwandung des Wickelschlauches eingebracht. Wenn ein fluides Medium, insbesondere ein Gas den Wickelschlauch durchströmt, wird durch die Lufteintrittsöffnungen 9 Luft bzw. Außenluft aus der Umgebung aufgrund des Unterdrucks im Schlauch angesaugt und auf diese Weise kann die Temperatur des durchströmenden fluiden Mediums und somit auch die Temperatur der Schlauchwandung reduziert werden.

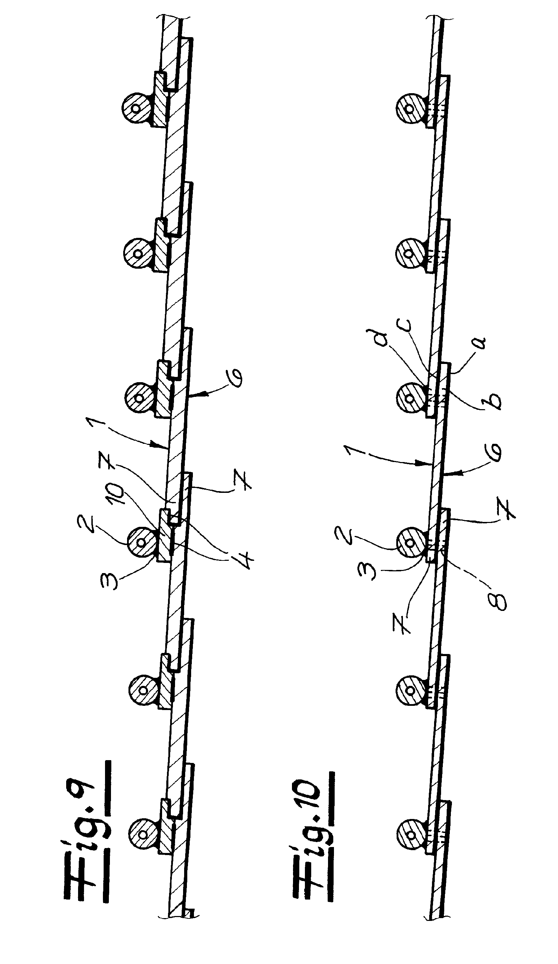

Im Ausführungsbeispiel gemäß Fig. 9 ist zunächst ein thermoplastisch verschweißbarer Werkstoffstreifen 1 mit einem nicht thermoplastisch verschweißbaren Werkstoffstreifen 6 in Form eines Aluminiumfolienstreifens schlauchinnenseitig kaschiert. Die Verbindung bzw. Verschweißung benachbarter Längskantenabschnitte 7 des Werkstoffstreifens 1 erfolgt hier durch einen weiteren thermoplastisch verschweißbaren Werkstoffstreifen 10. Bei diesem Werkstoffstreifen 10 kann es sich beispielsweise um ein mit einer thermoplastischen Beschichtung versehenes Gewebe handeln. Der weitere Werkstoffstreifen 10 wird über Streifenschweißnähte 4 auf die Oberseite der überlappenden Längskantenabschnitte 7 des Werkstoffstreifens 1 aufgeschweißt. Auf dem weiteren thermoplastisch verschweißbaren Werkstoffstreifen 10 ist die Armierung 2 über die Armierungsschweißnaht 3 aufgeschweißt.

Fig. 10 zeigt eine Ausführungsform, bei der wie im Ausführungsbeispiel gemäß Fig. 9 ein thermoplastisch verschweißbarer Werkstoffstreifen 1 mit einem nicht thermoplastisch verschweißbaren Werkstoffstreifen 6 in Form eines Aluminiumfolienstreifens schlauchinnenseitig kaschiert ist. Die Armierung 2 ist hier über die Armierungsschweißnaht 3 im Bereich zweier überlappender Längskantenabschnitte 7 des Werkstoffstreifenaggregates auf das obere Werkstoffstreifensegment des thermoplastisch verschweißbaren Werkstoffstreifens 1 aufgeschweißt. Die überlappenden Längskantenabschnitte 7 des Werkstoffstreifenaggregates sind hier allerdings nicht durch eine Streifenschweißnaht 4 miteinander verbunden, sondern die überlappenden Längskantenabschnitte 7 sind mittels einer Nähnaht 8 miteinander vernäht. Die Vernähung der überlappenden Längskantenabschnitte 7 wurde hier mit einem hitzebeständigen Garn realisiert, so dass die Verbindung der überlappenden Längskantenabschnitte 7 durch ein durchströmendes heißes fluides Medium nicht beeinträchtigt wird. Die Armierungsschweißnaht 3 wird hier durch eine Schlauchwandungsverstärkung in Form von vier übereinander angeordneten Lagen a, b, c, d vor Hitzeeinwirkung geschützt.

## Patentansprüche

1. Wickelschlauch mit zumindest einem wendelförmig zu dem Wickelschlauch gewickelten Werkstoffstreifen (1, 6) sowie zumindest einer wendelförmig an der Außenseite des Wickelschlauches gewickelten Armierung (2),
wobei die Armierung (2) aus zumindest einem Kunststoff besteht und auf die Außenseite des Wickelschlauches über eine Armierungsschweißnaht (3) aufgeschweißt ist
und wobei im Bereich der Armierungsschweißnaht (3) zur Gewährleistung der Temperaturbeständigkeit der Armierungsschweißnaht zumindest zwei Lagen (a, b), insbesondere zumindest drei Lagen (a, b, c) des zumindest einen Werkstoffstreifens (1) übereinander angeordnet sind.

2. Wickelschlauch nach Anspruch 1, wobei der Wickelschlauch aus einem einzigen Werkstoffstreifen (1, 6) gewickelt ist und im Bereich der Armierungsschweißnaht (3) zumindest drei, vorzugsweise drei Lagen (a, b, c) des Werkstoffstreifens (1, 6) übereinander angeordnet sind.

3. Wickelschlauch nach Anspruch 1, wobei zumindest ein thermoplastisch verschweißbarer Werkstoffstreifen (1) und zumindest ein nicht thermoplastisch verschweißbarer Werkstoffstreifen (6) wendelförmig zu dem Wickelschlauch gewickelt sind und wobei der nicht thermoplastisch verschweißbare Werkstoffstreifen (6) auf der Innenseite des Wickelschlauches angeordnet ist.

4. Wickelschlauch nach Anspruch 3, wobei der nicht thermoplastisch verschweißbare Werkstoffstreifen (6) ein hitzebeständiges Gewebe oder ein Metallfolienstreifen, insbesondere ein Aluminiumfolienstreifen ist.

5. Wickelschlauch nach einem der Ansprüche 3 oder 4, wobei der zumindest eine thermoplastisch verschweißbare Werkstoffstreifen (1) mit dem zumindest einen nicht thermoplastisch verschweißbaren Werkstoffstreifen (6) vernäht ist.

6. Wickelschlauch nach einem der Ansprüche 1 bis 5, wobei zwei Lagen des zumindest einen Werkstoffstreifens (1, 6) unterhalb der Armierungsschweißnaht (3) über eine Streifenschweißnaht (4) miteinander verschweißt sind und wobei zumindest eine dritte Lage Werkstoffstreifen (1, 6) unterhalb der Streifenschweißnaht (4) angeordnet ist.

7. Wickelschlauch nach einem der Ansprüche 1 bis 6, wobei Längskantenabschnitte (5) einer inneren Lage des zumindest einen Werkstoffstreifens (1, 6) in den Innenraum des Wickelschlauches vorstehen.

8. Wickelschlauch nach einem der Ansprüche 1 bis 7, wobei in der Schlauchwandung des Wickelschlauches eine Mehrzahl von Lufteintrittsöffnungen (9) vorgesehen ist.

9. Wickelschlauch nach einem der Ansprüche 3 bis 8, wobei zumindest ein thermoplastisch verschweißbarer Werkstoffstreifen (1) schlauchinnenseitig mit zumindest einem nicht thermoplastisch verschweißbaren Werkstoffstreifen (6) kaschiert ist und wobei zum Verbinden benachbarter Längskantenabschnitte (7) dieses Werkstoffstreifenaggregates ein Längskantenabschnitt (7) auf einen benachbarten Längskantenabschnitt (7) umgeschlagen ist und wobei die beiden aufeinanderliegenden Längskantenabschnitte (7) thermoplastisch miteinander verschweißt sind.

10. Wickelschlauch nach einem der Ansprüche 1 bis 9, wobei zwischen zumindest zwei Lagen des zumindest einen Werkstoffstreifens (1, 6) Luftkammern (11) in der Schlauchwandung des Wickelschlauches vorgesehen sind.

11. Wickelschlauch nach einem der Ansprüche 1 bis 10, wobei die Armierung (2) ein wendelförmig gewickeltes Hohlprofil aus Kunststoff ist.

12. Wickelschlauch nach einem der Ansprüche 1 bis 11, wobei die Armierung zumindest zum größten Teil aus zumindest einem bzw. aus einem thermoplastischen Elastomer besteht.

13. Wickelschlauch nach einem der Ansprüche 1 bis 12, wobei der Kunststoff der Armierung (2) eine Härte von 30 Shore-D bis 50 Shore-D, bevorzugt eine Härte von 35 Shore-D bis 45 Shore-D aufweist und/oder wobei der Kunststoff der Armierung (2) einen Druckverformungsrest (bei 70 °C gemäß DIN ISO 815) von 45 % bis 65 %, bevorzugt von 50 % bis 60 % aufweist.

14. Wickelschlauch nach einem der Ansprüche 1 bis 13, wobei zumindest ein thermoplastisch verschweißbarer Werkstoffstreifen (1) aus einem Gewebe mit einer Beschichtung aus thermoplastisch verschweißbarem Kunststoff besteht.

15. Wickelschlauch nach Anspruch 14, wobei es sich bei dem Gewebe um ein Gewebe aus Polyesterfasern und/oder Polyamidfasern und/oder Glasfasern und/oder Aramidfasern handelt.
